# EUROPEAN PATENT SPECIFICATION

(11) **EP 4 100 342 B1**
(45) Date of publication and mention of the grant of the patent: **21.10.2026**
(21) Application number: 21702163.3
(22) Date of filing: 11.01.2021
(51) Int. Cl.: B65G 65/46, B65G 65/42, B65G 11/02, B65D 88/64

(54) **HOPPER FOR FEEDING BULK MATERIAL**
TRICHTER ZUM ZUFÜHREN VON SCHÜTTGUT
TRÉMIE POUR L'ALIMENTATION DE MATÉRIAU EN VRAC

(30) Priority: 05.02.2020 GB 202001556
(43) Date of publication of application: 14.12.2022
(73) Proprietor: Qlar Europe GmbH, 64293 Darmstadt (DE)
(72) Inventor: CHLEBOVEC, Michal, 05801 Poprad-Velka (SK)
(74) Representative: HGF
(86) International application number: PCT/EP2021/050337
(87) International publication number: WO 2021/156014

(56) References cited:
- EP-A1- 0 001 576
- CN-A- 103 159 042
- CN-A- 110 510 327
- JP-A- S60 232 329
- US-A- 2 319 177
- US-A1- 2009 302 065
- US-A1- 2019 119 038
- US-B1- 10 005 622

## Description

### FIELD OF THE INVENTION

The present invention relates to an apparatus and method for feeding bulk material. More particularly, the present invention relates to an apparatus in the form of a hopper and a method for feeding bulk and/or particulate material such as bulk solids which provides a constant and reliable feed of bulk material.

### BACKGROUND OF THE INVENTION

There is a need in the technical field of feeding bulk material to provide an apparatus and method which provides a constant and reliable feed of material and overcomes inconsistent feeding of bulk material.

Prior art systems in the form of hoppers have consisted of apparatus with straight walls (i.e. vertical walls) and conical bottoms. The hoppers with straight vertical walls require high torque for agitators to empty the contents of the hopper. Such systems have been found to result in blockages (usually permanent) of the material which are commonly known as 'bridging blockages'. Not only does this lead to inconsistent feeding of material but also on some occasions requires mechanical cleaning between batches. Even when agitators are applied to such systems the agitators are not able to clear the blockage of material i.e. the bridging blockage.

The bridging of material provides a number of significant problems when feeding bulk material such as bulk solids in. The bridging of material creates the situation where in an outlet of the hopper there is no material which leads to incorrect feeding of a feeding/dosing trough. This results in the incorrect amount of material being fed to a further process downstream such as a burning process which then leads to further consequent problems such as an increase in CO peaks during the burning process. The burning process may, for example, be used to burn refuge waste such as household and/or industrial waste. Due to the inconsistent burning process other fuel then has to be added to the process which not only further complicates the running process but also adds some delay or miss-regulation to the process.

As indicated above, the potential bridge caused by the blockage of material increases the probability of CO peaks. The formed bridge has to be eliminated as soon as possible in view of the burning process such as using an agitator or providing further material into the hopper. This obviously leads to a complicated process and inevitably CO peaks during the burning process which are not only environmentally unfriendly but also lead to a very inefficient process.

A further problem caused by the blockage and bridging of material in prior art systems is that the blocked material can apply excessive torque demands on agitators located in the hopper and also reduces the amount of material which can be fed into the hopper.

An example of a device according to the art can be found in US 10 005 622 B1, where a hopper insert is described, which provides for an asphalt paving machine. The hopper insert has an outlet which has first and second lateral outlet opening edges which converge toward each other from front to rear along at least a majority of the outlet length.

It is an object of at least one aspect of the present invention to obviate or mitigate at least one or more of the aforementioned problems.

It is a further object of at least one aspect of the present invention to provide an apparatus and method for feeding bulk material in a consistent and reliable manner.

It is a yet further object of at least one aspect of the present invention to provide an apparatus in the form of a hopper and method for feeding bulk material which reduces the possibility of having permanent blockages of material in the hopper.

### SUMMARY OF THE INVENTION

The present invention therefore relates to an apparatus in the form of a hopper according to claim 1 for providing a constant and reliable feed of bulk material.

The bulk material to be conveyed by the hopper may be any type of type of bulk material. In particular embodiments, the material being conveyed may be household and/or industrial waste which is being sent for incineration. Alternatively, the bulk material being transferred may be any type of solid fuel (e.g. coal) or any other type of solid particulate material including powder or powder-like material.

The hopper may provide a feed of material for any type of conveying system.

The hopper preferably provides a reliable and constant or substantially constant feed of material and overcomes permanent blockages which are found in prior art systems.

A specific feature of the present invention is to use what is called 'negative angles' on surfaces on the upper portion of the hopper. This has been found to reduce the torque demands on agitators used to facilitate the flow of material and to also maximise the usable volume of the hopper. By using negative angles in the design of the hopper of the present invention has been found to reduce the torque demands by up to about 70% in the operation of the hopper and agitators.

Typically, bulk material may be fed into the inlet and passes through the substantially vertical passageway and out through the outlet.

In use, the hopper may be typically vertically or substantially vertically oriented to facilitate the flow of the bulk material through the hopper.

The inlet of the hopper may be located above or substantially above the outlet of the hopper. This facilitates the flow of material through the hopper.

Typically, the upper portion of the hopper may be longer in height extending down the central vertical axis of the hopper in the direction of travel of the bulk material than the lower portion of the hopper.

The upper portion of the hopper may, for example, be about 1 - 5 times or about 2 - 5 times the height of the lower portion of the hopper. Typically, the upper portion of the hopper may be at least about two or at least about three times the height of the lower portion of the hopper.

The upper and/or lower portions of the hopper may comprise at least one or a plurality of flat or substantially flat panels. The at least one or a plurality of panels in the upper and/or lower portions may be substantially flat and/or substantially planar.

The panels are intended to provide a smooth inner surface for material to pass through the hopper from the inlet to the outlet with the minimum amount of friction and/or resistance and to thereby prevent any blockages of material.

Preferably, both the upper and lower portions of the hopper may comprise at least one or a plurality of flat and/or substantially planar panels. The panels may be substantially flat and/or substantially planar.

In preferred embodiments, in the upper portion of the hopper there may be at least one or a series of flat and/or substantially flat and/or substantially planar panels. It is important to appreciate that a number of these panels are what is known in the art as 'negative angles'. By having 'negative angles' we mean that the panels extend outwards and away from a central axis 'Y' of the hopper as the bulk material travels from the inlet through and out of the outlet.

The panels may therefore typically extend outwards and point away from the exit outlet of the hopper.

Preferably, more than half or the majority of the panels forming the upper portion of the hopper extend outwards and away from a central axis 'Y' of the hopper as the bulk material travels from the inlet through and out of the outlet.

The panels forming the upper portion which extend outwards may be any of any suitable size and shape. For example, any type of polygon shapes may be used such as three-, four-, five- or six-sided shapes. Typically, the panels are flat or substantially flat and thereby form a flat smooth surface on the inside surface of the passageway passing through the hopper.

At least one or a plurality of panels forming the upper portion are therefore preferably inclined outwards from the central axis 'Y' in the direction of travel of the bulk material. The degree of inclination outwards from vertical axis 'Y' may range from about 2 degrees - about 45 degrees. A preferred degree of inclination outwards may be about 5 degrees - about 20 degrees. Typically, access hatches may be located on the panels on the upper portion to provide access to the inside of the hopper. Personnel may therefore access the insider hopper for routine inspection.

According to the invention, there is a combination of two larger six-sided panels and two smaller triangular panels which are inclined outwards from the central axis 'Y' of the hopper as the bulk material travels from the inlet through and out of the outlet.

The triangular panels may have a degree of inclination outwards from the central axis 'Y' in the direction of travel of the bulk material from about 2 degrees - about 45 degrees. A preferred degree of inclination outwards is about 5 degrees - about 20 degrees.

Preferably, in the upper portion of the hopper the majority of the panels extend outwards and away from the central axis 'Y' in the direction of travel of the bulk material. As indicated above, this is known as having panels at a 'negative angle'.

The hopper is highly symmetrical in shape.

On the lower portion of the hopper there may be at least one or a plurality of agitators located on an inner surface of the hopper capable of providing a form of stirring and/or disrupting and/or wiping (i.e. scraping) action to dislodge material which may have become stuck and thereby at risk of forming a blockage. Alternatively, there may be at least one or a plurality of agitators located on an outer surface of the hopper capable of providing vibration and/or pulsing to the lower portion of the hopper. Any type of agitating or vibrating device may be used. This helps to facilitate the flow of material to the outlet of the hopper.

Typically, there may be two or more agitators located on opposite sides of the lower portion of the hopper. Any form or number of agitators may be used which are capable of dislodging and/or disrupting material on the inner sides of the hopper. The agitators may be located on an inner surface or an outer surface of the hopper.

The agitators may be located on a flat planar or substantially planar panel forming part of the lower portion.

In preferred embodiments, in the lower portion of the hopper there may be at least one or a series of flat and/or substantially flat and/or substantially flat a planar panels.

In contrast to the majority of the panels in the upper portion of the hopper, at least one, the majority or all of the panels forming the lower portion of the hopper are inclined in towards the central axis of the hopper. The panels may therefore extend inwardly towards the central axis 'Y' in the direction of travel of the bulk material.

The agitators may preferably be substantially centrally located on the panels on which they are located.

The agitators may be located on any outer or inner surface location of the lower portion of the hopper. However, it is preferred that the agitators are located on panels which extend inwardly towards the central axis 'Y' in the direction of travel of the bulk material.

In preferred embodiments at least one, the majority or all of the panels forming the lower portion of the hopper may therefore extend inwardly towards the central axis 'Y' in the direction of travel of the bulk material. The panels may therefore be inclined in towards and direct bulk material to the outlet. The panels may therefore be described as being oriented at a 'positive angle'.

The degree of inclination of the panels forming the lower portion may be inclined in towards from a vertical central 'Y' axis ranging from about 10 degrees - about 45 degrees. A preferred degree of inclination inwards is about 20 degrees - about 40 degrees.

Typically, they may be at least one or a plurality of agitators located on the lower portion of the main body.

In preferred embodiments, the agitators on the lower portion are located on panels forming the lower portion which are inclined in towards the central axis of the hopper. The agitators may therefore be located on panels which extend inwardly towards the central axis 'Y' in the direction of travel of the bulk material. This may therefore be described as a 'positive angle'. The degree of inclination in towards from a vertical central 'Y' axis may range from about 10 degrees - about 45 degrees. A preferred degree of inclination inwards is about 20 degrees - about 40 degrees.

The agitators may be located on an inner surface of the hopper and may provide a form of stirring and/or disrupting and/or wiping (i.e. scraping) action to dislodge material which may have become stuck and thereby at risk of forming a blockage. Alternatively, the agitators may be located on the outside of the hopper and may produce high frequency vibrations which prevent long-term blockages of the bulk material and aid the flow of the bulk material towards the outlet.

In particular embodiments, all of the panels forming the lower portion of the hopper extend inwardly towards the central axis 'Y' in the direction of travel of the bulk material. The degree of inclination in towards from a vertical central 'Y' axis may range from about 10 degrees - about 45 degrees. A preferred degree of inclination inwards is about 20 degrees - about 40 degrees.

A further preferred important feature of the hopper is that due to the inclined inwardly pointing panel surfaces in the lower portion of the hopper, the outlet is smaller than the cross-sectional area between the upper portion and the lower portion of the hopper.

Typically, the outlet may be about 30% - 80% smaller than the cross-section of the area between the upper portion and the lower portion of the hopper. Typically, the outlet may be about 50% smaller than the cross-section of the area between the upper portion and the lower portion the hopper.

The purpose of the inwardly directed panels on the lower portion not only facilitates the agitation process but also means that the bulk material is not perpendicular to the force of the agitators. This means that the effectiveness of the agitation is increased and has been found to be significantly effective in preventing permanent blockages in the hopper.

A potential function of the hopper is to act as a short-term storage or so-called buffer system to eliminate fluctuations in the amount/volume of material being fed and to avoid delays of any suitable type of feed system.

A further specific advantage of the hopper is that by using a combination of the outwardly inclined panels in the upper portion and the inwardly inclined panels in the lower portion this maximises the volume capacity of the hopper in comparison to prior art hoppers with traditional and simple vertical sides. Moreover, due to the increase in volume capacity, this allows more efficient use of space on the conveying line and also allows lower manufacturing costs.

A further advantage of the hopper is that where substantially all or preferably all of the panels forming the outer body of the hopper are all flat or substantially flat this reduces manufacturing costs and also facilitates ease of manufacture.

The flat surfaces are also highly effective in preventing blockages in the flow of the bulk material in the passageway passing through the centre of the hopper. It is preferred that all surfaces in the passageway passing through the centre of the hopper are flat or substantially flat and also smooth. This prevents any material forming blockages.

Furthermore, by reducing the material pressure on the agitators with the inclined walls in the lower portion has been found to improve the lifetime of the agitators and to also allow more efficient removal of bulk material from the hopper.

The hopper is designed to provide sufficient volume for short time storage of bulk material in a range of feeding devices. For example, the amount of bulk material held may range from about 1m³ to about 50m³.

In preferred embodiments all of the panels used in the construction of the hopper are flat or substantially flat and/or substantially planar and thereby form a flat and/or smooth surface for the passageway passing through the centre of the hopper. This facilitates both manufacture and reduces cost.

Although any suitable material may be used for the construction of the panels sheet metal and/or composite material and/or alloy may be a typically preferred option. The panels may be of a typically a substantially thin construction such as about 1 - 20 mm in thickness.

The hopper of the present invention may also be connected to any form of conveying system such as mechanical conveying system. The conveying systems which they may be connected may comprise conveying screws which may be driven by a motor or any other type of drive means.

In use, bulk material may initially be fed into the inlet of the hopper. As indicated above, any type of bulk material may be used. The bulk material may then enter the upper portion of the hopper. As explained above, at least one or a majority of the panels in the upper portion of the hopper may typically extend and may be inclined outwards from the central axis 'Y' in the direction of travel of the bulk material. This has been found to be an important feature in preventing potential bridges and blockages in the hopper.

The bulk material may then pass into the lower portion of the hopper where at least one or a majority of the panels may extend inwardly towards the central axis 'Y' in the direction of travel of the bulk material. In combination with the stirring and/or disrupting and/or wiping (i.e. scraping) and/or vibrations provided by the agitators such an arrangement has been found to be highly effective in preventing blockages and thereby providing a constant and reliable feed of bulk material.

A further advantage is that the load and torque exerted on the agitators may be significantly reduced by up to about 70% in comparison to hoppers with vertical straight sides. Such a system has also been found to maximise the available volume of material which can be inserted into the hopper.

By preventing any form of blockage in the hopper this enables the time spent for bulk material in the hopper to be kept to a minimum thereby increasing reliability and preventing forms of permanent blockage. Such a system also ensures a constant and reliable feed to subsequent processing systems such as a burning process for household and/or industrial waste.

According to a third aspect of the present invention there is provided a method of providing a substantially constant feed of bulk material, said method comprising:
providing a main body having an upper portion and a lower portion;
providing an inlet located on an upper surface of the upper portion of the main body for bulk material to enter the hopper;
providing an outlet located on a lower surface of the lower portion of the main body for bulk material to exit the hopper;
the main body defining a substantially vertical passageway for bulk material to pass from the inlet down and substantially vertically through the outlet of the hopper;
the upper portion of the main body having at least one or a plurality of panel surfaces which are inclined outwards from a centrally positioned substantially vertical axis passing through the centre of the hopper from the inlet to the outlet in the direction of travel of the bulk material; and
the lower portion of the main body having at least one or a plurality of panel surfaces which are inclined inwards towards the substantial vertical axis passing through the centre of the hopper from the inlet to the outlet in the direction of travel of the bulk material.

According to a fourth aspect of the present invention there is provided a method of providing a substantially constant feed of bulk material, said method comprising:
providing a main body having an upper portion and a lower portion;
providing an inlet located on an upper surface of the upper portion of the main body for bulk material to enter the hopper;
providing an outlet located on a lower surface of the lower portion of the main body for bulk material to exit the hopper;
the main body defining a substantially vertical passageway for bulk material to pass from the inlet down and substantially vertically through the outlet of the hopper;
the upper portion of the main body having at least one or a plurality of substantially planar panel surfaces which are inclined outwards from a centrally positioned substantially vertical axis passing through the centre of the hopper from the inlet to the outlet in the direction of travel of the bulk material; and
the lower portion of the main body having at least one or a plurality of substantially planar panel surfaces which are inclined inwards towards the substantial vertical axis passing through the centre of the hopper from the inlet to the outlet in the direction of travel of the bulk material.

According to fifth aspect of the present invention there is provided use of the hopper defined in the first and second aspect for providing a substantially constant feed of bulk material.

According to sixth aspect of the present invention there is provided a conveying system comprising a hopper as defined in the first and second aspect.

The hopper may be used to provide a constant and/or reliable feed of material to the conveying system.

The conveying system may be any suitable type of conveying system.

For example, the conveying system may be part of a system for burning household and/or industrial waste.

### DESCRIPTION OF THE FIGURES

Embodiments of the present invention will now be described, by way of example only, with reference to the following Figures in which:
Figure 1 is a perspective view of a hopper according to an embodiment of the present invention;
Figure 2 is a further perspective view of the hopper shown in Figure 1 rotated 180° around a vertical axis according to an embodiment of the present invention;
Figure 3 is a further perspective view of the hopper shown in Figures 1 and 2 according to an embodiment of the present invention;
Figure 4 is a further view of the hopper shown in Figure 3 rotated by 180° around a vertical axis according to an embodiment of the present invention;
Figure 5 is a front view of the hopper shown in Figures 1 to 4 according to an embodiment of the present invention;
Figure 6 is a view of the hopper shown in Figures 1 to 5 according to an embodiment of the present invention;
Figure 7 is a side view of the hopper shown in Figures 1 to 6 according to an embodiment of the present invention;
Figure 8 is a side view of the other side of the hopper shown in Figure 7 according to an embodiment of the present invention;
Figure 9 is a perspective bottom view of the hopper shown in Figures 1 to 8 according to an embodiment of the present invention;
Figure 10 is a sectional view of the hopper shown in Figures 1 to 9 according to an embodiment of the present invention; and
Figure 11 is a sectional side view of the hopper shown in Figures 1 to 10 attached to part of a conveying/feeding system according to a further embodiment of the present invention.

### DETAILED DESCRIPTION

The present invention relates to an apparatus and method for feeding bulk material which provides a constant and reliable feed of bulk material. The bulk material may be any type of type of bulk and/or particulate material. In particular embodiments, the material being conveyed may be in the process of being sent for incineration such as household and/or industrial waste. Furthermore, the bulk material being transferred may be any type of solid fuel (e.g. coal) or any other solid material including powder or powder-like material. The bulk material may also include any type of foodstuff in a solid and/or powder form.

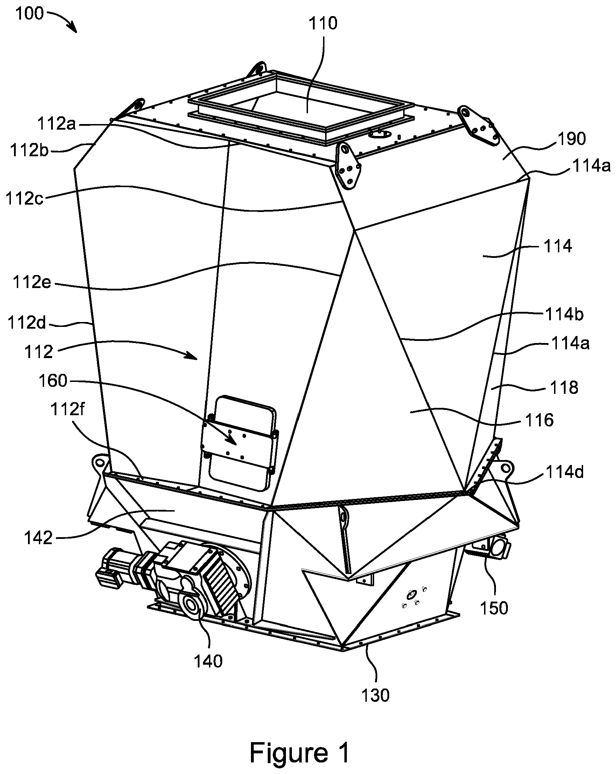

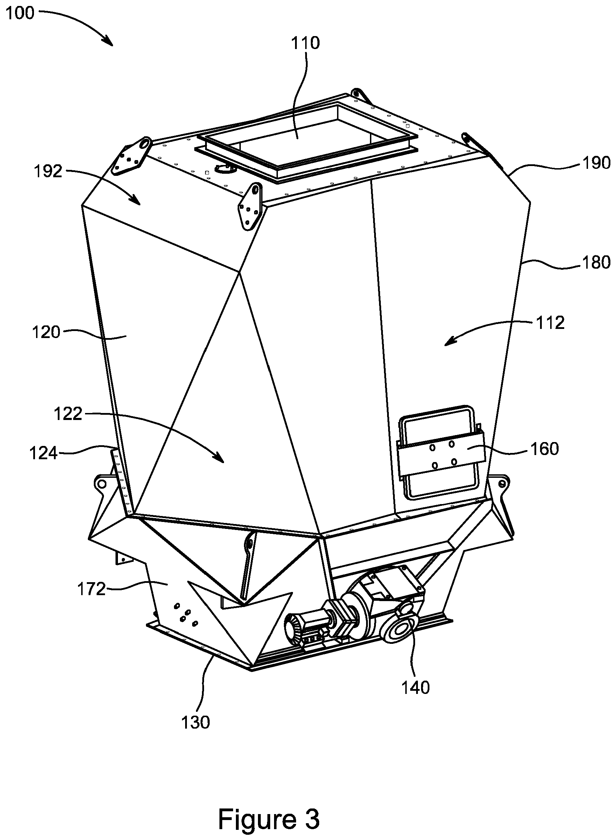

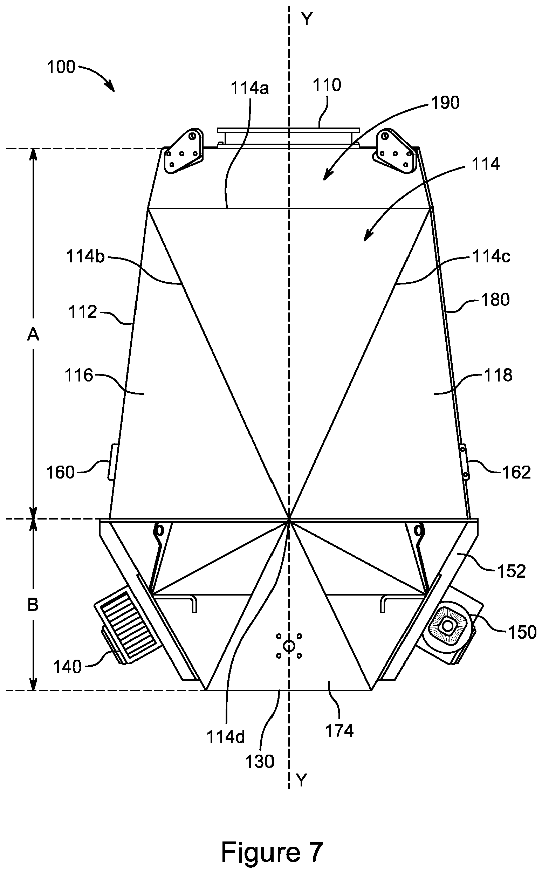

Figures 1 to 11 show a range of representations and views of a hopper generally designated 100 according to the present invention. The hopper 100 feeds bulk material and is intended to overcome any problems associated with prior art systems with potential bridging in the system causing permanent blockages in the transportation of the bulk material.

A specific feature of the present invention is to use what is called 'negative angles' on main surfaces of the hopper 100. This has been found to reduce the torque demands on agitators used to facilitate the flow of material and to also maximise the usable volume of the hopper 100. These are specific technical advantages over the prior art devices which use vertical straight walls and conical bottoms for their hopper designs. Such prior art designs have been found to lead to permanent blockages in the flow of bulk material and to also lead to exerting excessive torque demands on the agitators. By using negative angles in the design of the hopper of the present invention has been found to reduce the torque demands by up to about 70% in the operation of the hopper and agitators.

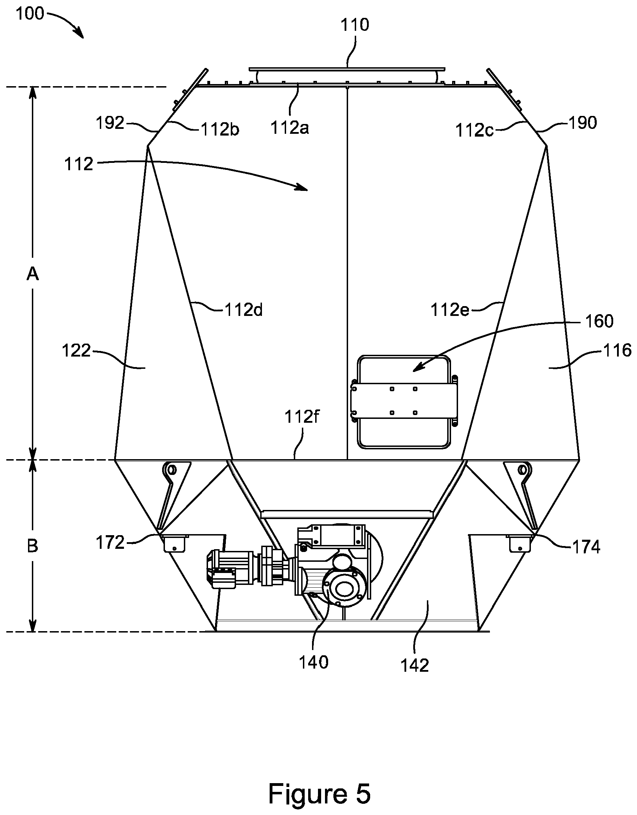

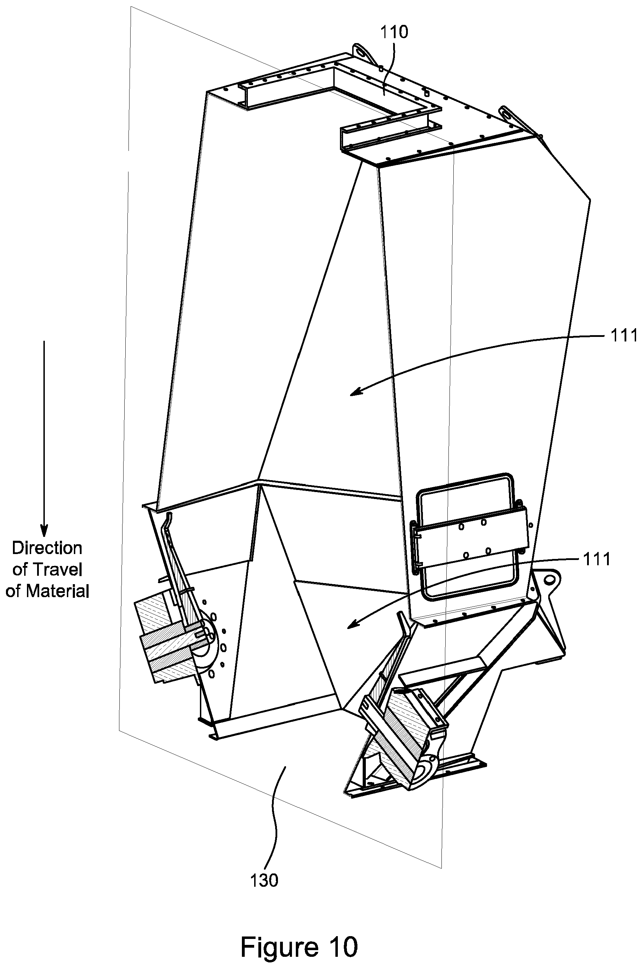

Referring to Figures 1 to 11 a hopper 100 is shown to have an inlet 110 located on an upper surface of the hopper 100 and an outlet 130 located on a lower surface of the hopper 100. Bulk material will therefore be fed into inlet 110 and pass through a central passageway 111 down and out through the outlet 130. The central passageway 111 is clearly shown in the cross-sectional view of Figure 10. Figures 5 to 8 and 10 also clearly show a central vertical axis 'Y' extending through the centre of the hopper 100.

The hopper 100 as clearly shown in Figures 5 to 8 and 11 has an upper portion identified by reference numeral 'A' and a lower portion identified by reference numeral 'B'. The upper portion 'A' is longer in height extending down the central vertical 'Y' axis of the hopper 100 than the lower portion 'B'. The upper portion 'A' is, for example, about 1 - 5 times or about 2 - 5 times the height of the lower portion 'B' and typically at least about double or at least three times the height of the lower portion 'B'.

We now refer to the upper portion 'A' of the hopper 100.

In the upper portion 'A' of the hopper 100 is shown a series of flat or substantially flat panels. It is important to appreciate that a number of these panels are what is known in the art as being oriented with 'negative angles'. By having 'negative angles' we mean that the panels extend outwards and away from a central axis 'Y' of the hopper 100 in the direction of travel as the bulk material travels from the inlet 110 through and out of the outlet 130. The panels therefore extend outwards and point away from the exit outlet 130 of the hopper 100 in the direction of travel of the bulk material.

Figure 1 shows that in the upper portion 'A' of the hopper 100 there is a negatively inclined flat or substantially flat panel 112 which points outwards and away from the central axis 'Y' in the direction of travel of the bulk material. The panel 112 therefore points outwards and away from the exit outlet 130 in the direction of travel of the bulk material.

The flat panel 112 is also clearly shown in Figure 5.

The flat panel 112 comprises six sides 112a, 112b, 112c, 112d, 112e, 112f. As shown in Figures 1 and 5, side 192a extends along the upper surface of the hopper 100 and side 112f extends along the lower end of the upper portion 'A' of the hopper 100. Sides 112b, 112c are significantly shorter than sides 112d, 112 e. Using sides 112d, 112e the flat panel 112 tapers down and reduces from a wider length at side 112a down to a shorter length at side 112f. Importantly, the panel 112 is inclined outwards from the central axis 'Y' in the direction of travel of the bulk material. The degree of inclination outwards from the vertical axis 'Y' may range from about 2 degree - about 45 degrees. A preferred degree of inclination outwards is about 5 degrees - about 20 degrees.

Figures 1 and 5 also clearly show that there is an access hatch 160 located on the panel 112. The access hatch 160 is an optional feature and allows access to the inside of the hopper 100 for any form of routine maintenance.

Figures 1, 4 and 7 show a side of the hopper 100. The side of the hopper 100 is mainly made up of three triangular areas which are in a series of panels 114, 116, 118. It is important to note that panel 114 similar to panel 112 points outwards and away from the central axis 'Y' in the direction of travel of the bulk material.

Panel 114 comprises a side 114a located up towards the inlet 110 and two sides 114b, 114c extending and tapering down to a point 114d at the intersection between the upper portion 'A' and the lower portion 'B'. There is also shown in the side a flat panel 190 extending along the side 114a of the triangular panel 114.

The triangular panel 114 has a degree of inclination outwards from the central axis 'Y' in the direction of travel of the bulk material from about 2 degrees - about 45 degrees. A preferred degree of inclination outwards is about 5 degrees - about 20 degrees.

The panel 190 also extends outwardly away from the central axis 'Y' in the direction of travel of the bulk material. The degree of inclination outwards from the central axis 'Y' in the direction of travel of the bulk material ranges from about 2 degree - about 45 degrees. A preferred degree of inclination outwards is about 5 degrees - about 20 degrees.

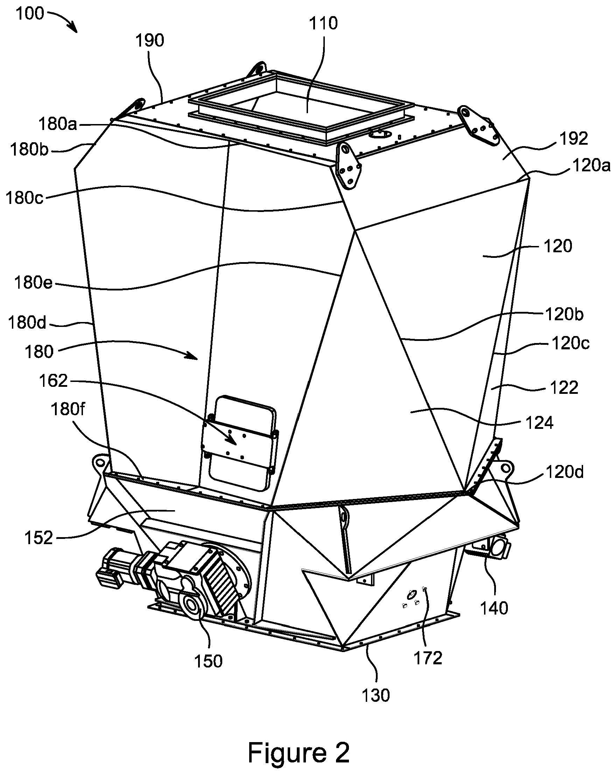

The hopper 100 is highly symmetrical in shape and Figures 2, 4 and 6 show the other side. Figures 2, 4 and 6 clearly show that there is a panel 180 which is the same shape and size as panel 112. Panel 180 comprises six sides 180a, 180b, 180c,180d, 180e, 180f. Side 180a extends along the upper surface of the hopper 100 and side 180f extends along the lower end of the upper portion 'A' of the hopper 100. Sides 180b, 180c are significantly shorter than sides 180d, 180 e. Using sides 180d, 180e the flat panel 180 tapers down and reduces from a wider length at side 180a down to a shorter length at side 180f. Importantly, the panel 180 is inclined outwards from the central axis 'Y' in the direction of travel of the bulk material. The degree of inclination outwards from vertical axis 'Y' may range from about 2 degrees - about 45 degrees. A preferred degree of inclination outwards is about 5 degrees - about 20 degrees.

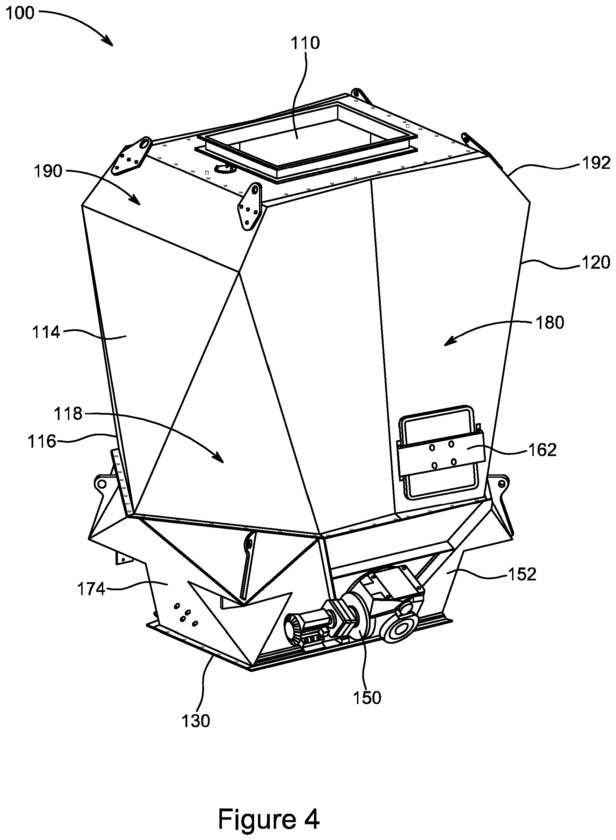

Figures 2 and 4 also clearly show that there is an access hatch 162 located on the panel 180. The access hatch 162 is an optional feature and allows access to the inside of the hopper 100.

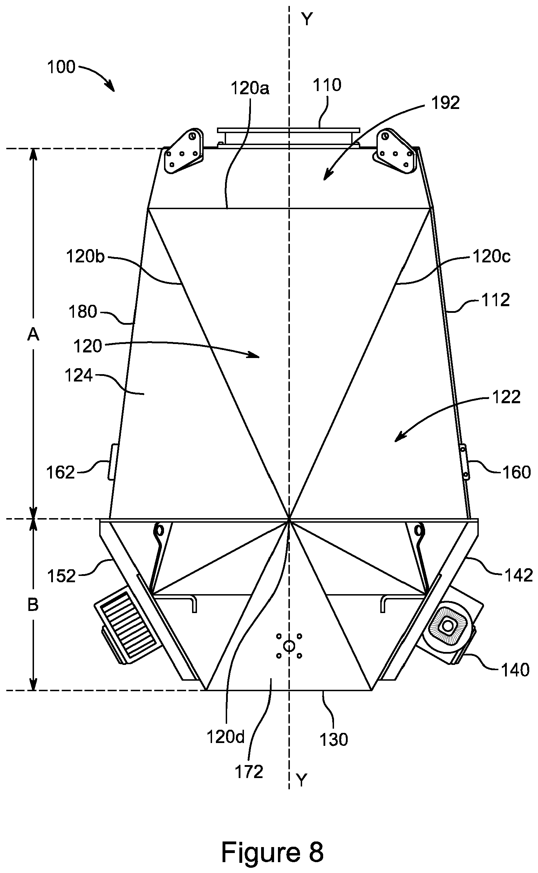

Figures 2 and 8 clearly show a further side of the hopper 100. This side of the hopper 100 is mainly made up again of three triangular areas which are in a series of panels 120, 122, 124. It is important to note that panel 120 similar to panels 112, 114, 180 points outwards and away from the central axis 'Y' in the direction of travel of the bulk material. The degree of inclination outwards from the central axis 'Y' in the direction of travel of the bulk material ranges from about 2 degrees - about 45 degrees. A preferred degree of inclination outwards is about 5 degrees - about 20 degrees.

Panel 120 comprises a side 120a located up towards the inlet 110 and two sides 120b, 120c extending and tapering down to a point 120d at the intersection between the upper portion 'A' and the lower portion 'B'. There is also shown in the side a flat panel 192 extending along the side 114a of the triangular panel 114. The panel 192 also extends outwardly away from the central axis 'Y' in the direction of travel of the bulk material.

The triangular panel 120 has a degree of inclination outwards from the central axis 'Y' in the direction of travel of the bulk material from about 2 degrees - about 45 degrees. A preferred degree of inclination outwards is about 5 degrees - about 20 degrees.

As shown above, in the upper portion 'A' of the hopper 100 the majority of the panels extend outwards and away from the central axis 'Y' in the direction of travel of the bulk material. As indicated above, this is known as having panels at a 'negative angle'.

We now refer to the lower portion 'B' of the hopper 100.

The lower portion 'B' of the hopper 100 is shown in all the Figures 1 to 11. On opposite sides of the lower portion 'B' of the hopper 100 there are two agitators 140, 150. Any form of agitators may be used which are capable of providing stirring and/or disrupting and/or wiping (i.e. scraping) and/or vibrations to the inner sides of the hopper 100. In addition, although two agitators 140, 150 are shown any number or a plurality of agitators may be used which are located on the lower portion 'B' of the hopper 100.

In particular, we refer to Figures 1, 3, 4, 5, 7 and 8 which show that agitator 140 is located on a flat planar or substantially planar panel 142. In comparison to the majority of the panels in the upper portion 'A' of the hopper 100, panel 142 is inclined in towards the central axis 'Y' of the hopper 100 and is intended to feed material into the outlet 130. The panel 142 therefore extends inwardly towards the central axis 'Y' in the direction of travel of the bulk material.

The agitator 140 is substantially centrally located on the panel 142. However, the agitators of the present invention can be located on any outer or iner surface location of the lower portion 'B' of the hopper 100 which extend inwardly towards the central axis 'Y' in the direction of travel of the bulk material.

The panel 142 extends inwardly towards the central axis 'Y' in the direction of travel of the bulk material. The panel 142 therefore is inclined in towards and directs bulk material to the outlet 130. This may therefore be described as a 'positive angle'. The degree of inclination in towards from a vertical central 'Y' axis may range from about 10 degrees - about 45 degrees. A preferred degree of inclination inwards is about 20 degrees - about 40 degrees.

On referring to Figures 2, 4, 6, 7 and 8 there is shown an agitator 150 opposite to the location of the agitator 140. The agitator 150 is located on the lower portion 'B' of the hopper 100. In particular, the agitator 150 is located on a panel 152 which is inclined in towards the central axis of the hopper 100 and is intended to feed material into the outlet 130. The panel 152 therefore extends inwardly towards the central axis 'Y' in the direction of travel of the bulk material. This may therefore be described as a 'positive angle'. The degree of inclination in towards from a vertical central 'Y' axis may range from about 10 degrees - about 45 degrees. A preferred degree of inclination inwards is about 20 degrees - about 40 degrees.

It is an important feature of the present invention in that the agitators 140, 150 are located on inwardly inclined surfaces on the lower portion 'B' of the hopper 100. The agitators 140, 150 are typically located externally otherwise they would lead to internal blockages of the bulk material.

The agitators 140, 150 produce disturbance in material to prevent long-term blockages of the bulk material and aid the flow of the bulk material towards the outlet 130. The agitators 140, 150 are important in providing a constant and reliable feet of material through the outlet 130.

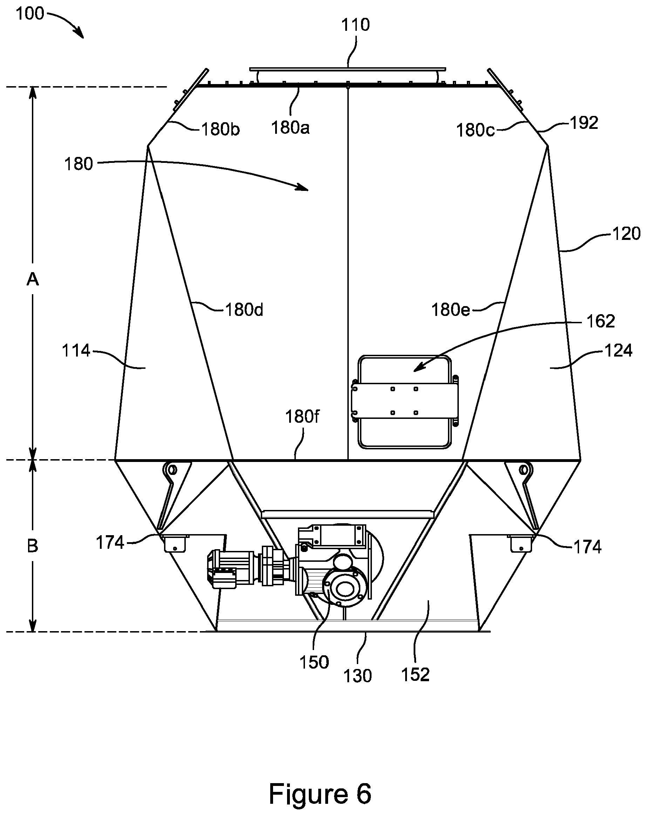

Figures 5 and 6 also show that there are also flat panels 172, 174 on the other sides of the lower portion 'B' of the hopper 100 which extend inwardly towards the central axis 'Y' in the direction of travel of the bulk material. The degree of inclination in towards from a vertical central 'Y' axis may range from about 10 degrees - about 45 degrees. A preferred degree of inclination inwards is about 20 degrees - about 40 degrees.

A further important feature of the hopper 100 is that due to the inclined inwardly pointing panel surfaces in the lower portion 'B' of the hopper 100, the outlet 130 is smaller than the cross-sectional area between the upper portion 'A' and the lower portion 'B' of the hopper 100. Typically, the outlet 130 is about 30% - 80% smaller than the cross-section of the area between the upper portion 'A' and the lower portion 'B' of the hopper 100. The example shown in the hopper 100 is that the outlet 130 is about 50% smaller than the intersection between the upper portion 'A' which has a majority of outwardly directed panels and the lower portion 'B' which has inwardly directed panels.

The purpose of the inwardly directed panels on the lower portion 'B' not only facilitates the agitation process but also means that the bulk material is not perpendicular to the force of the agitators 140, 150. This means that the effectiveness of the agitation is increased and has been found to be significantly effective in preventing permanent blockages in the hopper 100.

A potential function of the hopper 100 is to act as a short-term storage or so-called buffer system to eliminate fluctuations in the amount/volume of material being fed and to avoid delays of any suitable type of feed system.

A further specific advantage of the hopper 100 described above is that by using a combination of the inwardly inclined and mainly outwardly directed panels in the upper portion 'A' and the inwardly directed panels in the lower portion 'B' this maximises the volume capacity in relation to agitation requirements of the hopper 100 in comparison to hoppers with traditional and simple vertical sides. Moreover, due to the increase in volume capacity, this allows more efficient use of space on the conveying line and allows lower manufacturing costs.

A further advantage of the hopper 100 is that as shown in all of Figures 1 to 11 the panels on all sides are all flat or substantially flat which reduces manufacturing costs and also facilitates ease of manufacture. The flat surfaces are also highly effective in preventing blockages in the flow of the bulk material through the passageway 111.

Furthermore, by reducing the material pressure on the agitators 140, 150 with the inclined inwardly directed panel walls in the lower portion 'B' has been found to improve the lifetime of the agitators 140, 150 and has also been found to allow more efficient removal of bulk material from the hopper 100.

The hopper 100 is designed to provide sufficient volume for short time storage of bulk material in a range of feeding devices. For example, the amount of bulk material held may range from about 1m³ to about 50m³.

The hopper 100 has also been found to provide a constant and reliable feed and be highly effective in preventing blockages with the throughput of the bulk material from the inlet 110 down towards and out of the outlet 130.

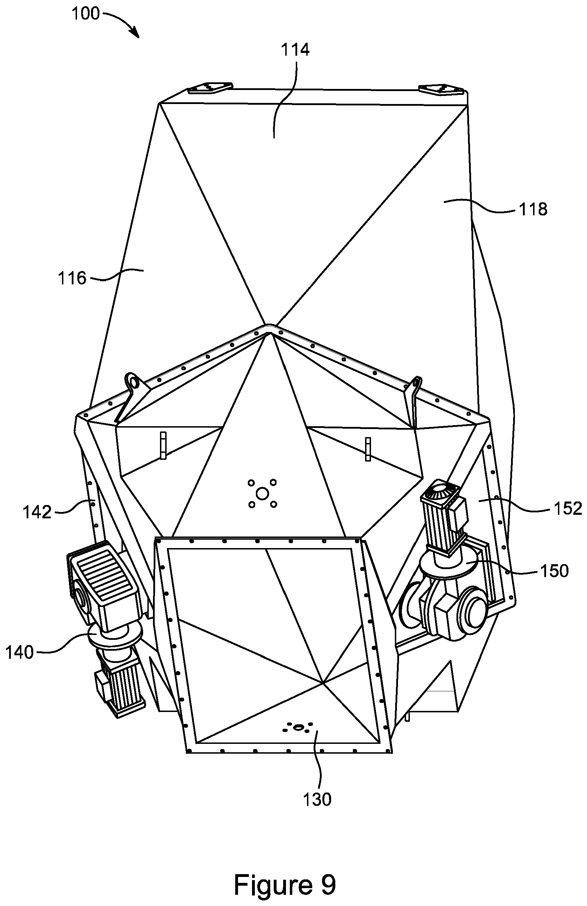

Figure 9 is a perspective view showing the bottom of the hopper 100. The outlet 130 is clearly shown. As mentioned above, the outlet 130 is smaller than the cross-sectional area between the upper portion 'A' and the lower portion 'B' of the hopper 100.

Figure 10 is a sectional view of the hopper shown in Figures 1 to 9. Figure 10 clearly shows that the material will enter through the inlet 110 and exit should outlet 130. Figure 10 also shows that there is a central passageway 111 extending from the inlet 110 to the outlet 130. The shape of the central passageway 111 is defined by the direction of the panels in the upper portion 'A' and lower portion 'B'.

It should be noted that all of the panels used in the construction of the hopper 100 are flat or substantially flat. Figure 10 also clearly shows that the inside surface of the passageway 111 is smooth with the flat or substantially flat panel surfaces in both the upper portion 'A' and lower portion 'B'. It is preferred that at least one, a majority or all the panel surfaces in the upper portion 'A' point outwards and away from the central axis 'Y' in the direction of travel of the bulk material. It is also preferred that at least one, a majority or all the panel surfaces in the lower portion 'B' point inwards and towards from the central axis 'Y' in the direction of travel of the bulk material.

The use of flat panels facilitates both manufacture and reduces cost.

The hopper 100 is also highly symmetrical meaning that this reduces the different number of different components required to manufacture the hopper 100.

Although any suitable material may be used for the construction of the panels sheet metal and/or composite material is a typically preferred option.

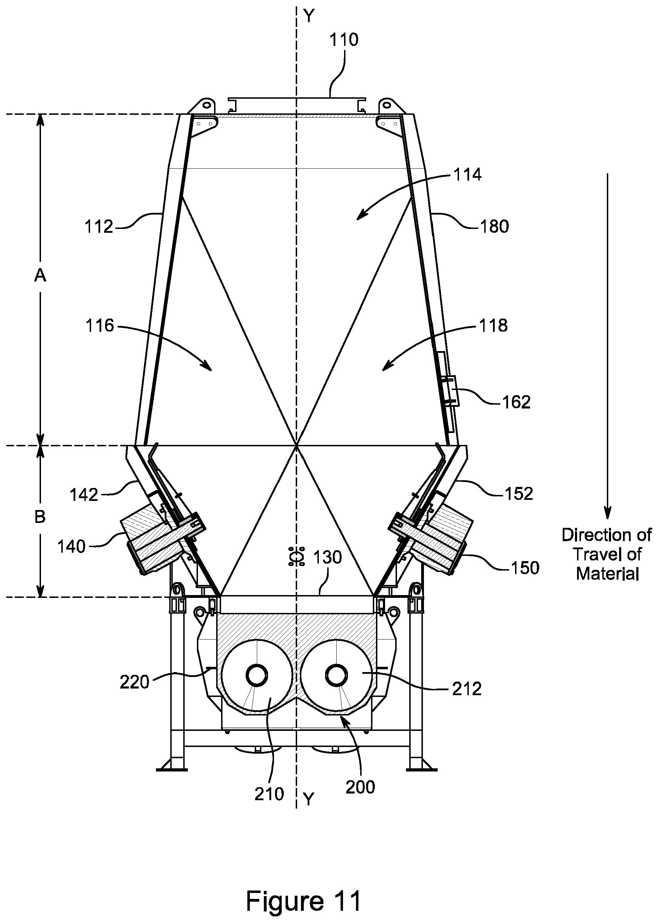

Figure 11 is a representation of the hopper 100 where there is a device 200 used to extract the bulk material exiting the outlet 130 in controlled way. There is shown a series of transport screws 210, 212 which are driven by a motor 220. However, it should be noted that the hopper 100 as described herein is highly suitable as providing a constant and reliable feed for a range of systems including any form of mechanical feed systems.

In use, bulk material is initially fed into the inlet 110. As indicated above, any type of bulk material may be used. The bulk material then enters the upper portion 'A' of the hopper 100. As explained above, at least one or a majority of the panels in the upper portion 'A' of the hopper 100 extend and are inclined outwards from the central axis 'Y' in the direction of travel of the bulk material. This has been found to be an important feature in preventing potential bridges and blockages in the hopper 100.

The bulk material then passes to the lower portion 'B' where at least one or a majority of the panels extend inwardly towards the central axis 'Y' in the direction of travel of the bulk material. In combination with the material disturbance provided by the agitators 140, 150 such an arrangement has been found to be highly effective in preventing blockages and thereby providing a constant and reliable feed of bulk material.

A further advantage is that the load and torque exerted on the agitators 140, 150 is significantly reduced and by up to about 70% in comparison to hoppers with vertical straight sides. Such a system has also been found to maximise the available volume of material which can be fed into the hopper 100. By preventing any form of permanent blockage in the hopper this enables the time spent for bulk material in the hopper 100 to be kept to a minimum thereby increasing reliability and preventing forms of permanent blockage. Such a system also ensures a constant and reliable feed to subsequent, for example, any form of mechanical processing systems.

Whilst specific embodiments of the present invention have been described above, it will be appreciated that departures from the described embodiments may still fall within the scope of the present invention. For example, any suitable type of flat or substantially panels may be used in the construction of the hopper. Furthermore, the hopper may be used as part of a larger system such as a mechanical system for the supply of any form of material.

## Claims

1. A hopper (100) for feeding bulk material, the hopper (100) comprising:
a main body having an upper portion (A) and a lower portion (B);
an inlet (110) located on an upper surface of the upper portion (A) of the main body for bulk material to enter the hopper (100);
an outlet (130) located on a lower surface of the lower portion (B) of the main body for bulk material to exit the hopper (100);
the main body defining a substantially vertical passageway (111) for bulk material to pass from the inlet (110) down and substantially vertically through the outlet (130) of the hopper (100);
wherein the upper portion (A) of the hopper (100) comprises two larger six-sided flat panels (112, 180) and two smaller triangular flat panels (114, 120) and a plurality of substantially planar panel surfaces (112,114,120,180,190,192) which are inclined outwards from a centrally positioned substantially vertical axis 'Y' passing through the centre of the hopper (100) from the inlet (110) to the outlet (130) in the direction of travel of the bulk material, ;
the lower portion (B) of the main body having a series or a plurality of substantially flat panels (142, 152, 172, 174) which are inclined inwards towards the substantial vertical axis 'Y' passing through the centre of the hopper (100) from the inlet (110) to the outlet (130) in the direction of travel of the bulk material;
wherein the hopper (100) is highly symmetrical in shape and capable of providing a substantially constant feed of bulk material through the outlet (130).

2. A hopper (100) for feeding bulk material according to claim 1, wherein the panels (112,114,120,180,190,192) forming the upper portion (A) of the hopper (100) are substantially flat polygon shapes.

3. A hopper (100) for feeding bulk material according to any preceding claim, wherein the panels (112,114,120,180,190,192) forming the upper portion (A) of the hopper (100) and extending outwards and away from a central axis 'Y' of the hopper (100) are inclined outwards in a range from about 2 degrees - about 45 degrees.

4. A hopper (100) for feeding bulk material according to any preceding claim, wherein the upper portion (A) of the hopper (100) is longer in height extending down the central vertical 'Y' axis of the hopper (100) than the lower portion (B) of the hopper (100).

5. A hopper (100) for feeding bulk material according to any preceding claim, wherein the upper portion (A) of the hopper is about 1 - 5 times or 2 - 5 times the height of the lower portion (B) of the hopper (100).

6. A hopper (100) for feeding bulk material according to any preceding claim, wherein there are two or more agitators (140,150) located on opposite sides (142,152) of the lower portion (B) of the hopper (100).

7. A hopper (100) for feeding bulk material according to any preceding claim, wherein the degree of inclination of the panels (142,152,172,174) forming the lower portion (B) range from about 10 degrees - about 45 degrees.

8. A hopper (100) for feeding bulk material according to claim 7, wherein the degree of inclination of the panels (142,152) in towards from a vertical central 'Y' axis ranges from about 10 degrees - about 45 degrees.

9. A hopper (100) for feeding bulk material according to any preceding claim, wherein the outlet (130) of the hopper (100) is about 30% - 80% smaller than the cross-section of the area between the upper portion (A) and the lower portion (B) of the hopper (100).

10. A hopper (100) for feeding bulk material according to any preceding claim, wherein the upper portion (A) and lower portion (B) of the hopper (A) are made from panels which are flat or substantially flat and form a flat and/or smooth surface for the passageway (111) passing through the hopper (100).

11. A conveying system comprising a hopper (100) as defined in any of claims 1 to 10; wherein the conveying system is part of a mechanical conveying system such as conveying system for burning household and/or industrial waste.

## Patentansprüche

1. Trichter (100) zum Zuführen von Schüttgut, wobei der Trichter (100) Folgendes umfasst:
einen Hauptkörper mit einem oberen Abschnitt (A) und einem unteren Abschnitt (B);
einen Einlass (110), der sich auf einer oberen Fläche des oberen Abschnitts (A) des Hauptkörpers befindet, durch den Schüttgut in den Trichter (100) eintritt;
einen Auslass (130), der sich auf einer unteren Fläche des unteren Abschnitts (B) des Hauptkörpers befindet, durch den Schüttgut aus dem Trichter (100) austritt;
wobei der Hauptkörper einen im Wesentlichen vertikalen Durchgang (111) definiert, durch den Schüttgut vom Einlass (110) nach unten und im Wesentlichen vertikal durch den Auslass (130) des Trichters (100) verlaufen kann;
wobei der obere Abschnitt (A) des Trichters (100) zwei größere sechsseitige flache Platten (112, 180) und zwei kleinere dreieckige flache Platten (114, 120) und mehrere im Wesentlichen plane Plattenflächen (112, 114, 120, 180, 190, 192) umfasst, die von einer mittig positionierten im Wesentlichen vertikalen Achse Y nach außen geneigt sind, die in Schüttgutbewegungsrichtung vom Einlass (110) zum Auslass (130) durch die Mitte des Trichters (100) verläuft;
wobei der untere Abschnitt (B) des Hauptkörpers eine Reihe oder mehrere im Wesentlichen flache Platten (142, 152, 172, 174) aufweist, die zur im Wesentlichen vertikalen Achse Y nach innen geneigt sind, die in Schüttgutbewegungsrichtung vom Einlass (110) zum Auslass (130) durch die Mitte des Trichters (100) verläuft;
wobei der Trichter (100) eine hochsymmetrische Form aufweist und dazu funktionsfähig ist, eine im Wesentlichen konstante Zufuhr von Schüttgut durch den Auslass (130) vorzusehen.

2. Trichter (100) zum Zuführen von Schüttgut nach Anspruch 1, wobei die Platten (112, 114, 120, 180, 190, 192), die den oberen Abschnitt (A) des Trichters (100) bilden, im Wesentlichen flache Polygonformen sind.

3. Trichter (100) zum Zuführen von Schüttgut nach einem der vorhergehenden Ansprüche, wobei die Platten (112, 114, 120, 180, 190, 192), die den oberen Abschnitt (A) des Trichters (100) bilden und sich nach außen und von einer Mittelachse Y des Trichters (100) weg erstrecken, in einem Bereich von etwa 2 Grad bis etwa 45 Grad nach außen geneigt sind.

4. Trichter (100) zum Zuführen von Schüttgut nach einem der vorhergehenden Ansprüche, wobei der obere Abschnitt (A) des Trichters (100) eine größere Höhe aufweist, die sich entlang der mittigen vertikalen Achse Y des Trichters (100) erstreckt, als der untere Abschnitt (B) des Trichters (100).

5. Trichter (100) zum Zuführen von Schüttgut nach einem der vorhergehenden Ansprüche, wobei der obere Abschnitt (A) des Trichters etwa das 1- bis 5-Fache oder das 2- bis 5-Fache der Höhe des unteren Abschnitts (B) des Trichters (100) beträgt.

6. Trichter (100) zum Zuführen von Schüttgut nach einem der vorhergehenden Ansprüche, wobei zwei oder mehrere Rührwerke (140, 150) auf gegenüberliegenden Seiten (142, 152) des unteren Abschnitts (B) des Trichters (100) angeordnet sind.

7. Trichter (100) zum Zuführen von Schüttgut nach einem der vorhergehenden Ansprüche, wobei der Neigungsgrad der Platten (142, 152, 172, 174), die den unteren Abschnitt (B) bilden, im Bereich von etwa 10 Grad bis etwa 45 Grad liegt.

8. Trichter (100) zum Zuführen von Schüttgut nach Anspruch 7, wobei der Neigungsgrad der Platten (142, 152) zu einer vertikalen mittigen Achse Y im Bereich von etwa 10 Grad bis etwa 45 Grad liegt.

9. Trichter (100) zum Zuführen von Schüttgut nach einem der vorhergehenden Ansprüche, wobei der Auslass (130) des Trichters (100) etwa 30 %-80 % kleiner als der Querschnitt der Fläche zwischen dem oberen Abschnitt (A) und dem unteren Abschnitt (B) des Trichters (100) ist.

10. Trichter (100) zum Zuführen von Schüttgut nach einem der vorhergehenden Ansprüche, wobei der obere Abschnitt (A) und der untere Abschnitt (B) des Trichters (A) aus Platten gefertigt sind, die flach oder im Wesentlichen flach sind und eine flache und/oder glatte Oberfläche für den Durchgang (111) bilden, der durch den Trichter (100) verläuft.

11. Fördersystem, das einen Trichter (100) nach einem der Ansprüche 1 bis 10 umfasst;
wobei das Fördersystem Teil eines mechanischen Fördersystems ist, wie etwa ein Fördersystem zum Verbrennen von Haushalts- und/oder Industrieabfällen.

## Revendications

1. Trémie (100) pour l'alimentation de matériau en vrac, la trémie (100) comprenant :
un corps principal ayant une partie supérieure (A) et une partie inférieure (B) ;
une entrée (110) située sur une surface supérieure de la partie supérieure (A) du corps principal pour que le matériau en vrac entre dans la trémie (100) ;
une sortie (130) située sur une surface inférieure de la partie inférieure (B) du corps principal pour que le matériau en vrac sorte de la trémie (100) ;
le corps principal définissant un passage sensiblement vertical (111) pour que le matériau en vrac passe de l'entrée (110) vers le bas et sensiblement verticalement à travers la sortie (130) de la trémie (100) ;
la partie supérieure (A) de la trémie (100) comprenant deux grands panneaux plats à six côtés (112, 180) et deux panneaux plats triangulaires plus petits (114, 120) et une pluralité de surfaces de panneaux sensiblement planes (112, 114, 120, 180, 190, 192) inclinées vers l'extérieur à partir d'un axe 'Y' sensiblement vertical positionné au centre de la trémie (100) depuis l'entrée (110) vers la sortie (130) dans la direction de déplacement du matériau en vrac,
la partie inférieure (B) du corps principal comportant une série ou une pluralité de panneaux sensiblement plats (142, 152, 172, 174) inclinés vers l'intérieur vers un axe sensiblement vertical 'Y' passant par le centre de la trémie (100) de l'entrée (110) à la sortie (130) dans la direction de déplacement du matériau en vrac ;
la trémie (100) étant de forme hautement symétrique et capable de fournir une alimentation sensiblement constante de matériau en vrac à travers la sortie (130).

2. Trémie (100) pour l'alimentation de matériau en vrac selon la revendication 1, les panneaux (112, 114, 120, 180, 190, 192) qui forment la partie supérieure (A) de la trémie (100) ayant des formes de polygone sensiblement plates.

3. Trémie (100) pour l'alimentation de matériau en vrac selon l'une quelconque des revendications précédentes, les panneaux (112, 114, 120, 180, 190, 192) qui forment la partie supérieure (A) de la trémie (100) et s'étendant vers l'extérieur et à l'écart d'un axe central 'Y' de la trémie (100) étant inclinés vers l'extérieur dans une plage allant d'environ 2 degrés à environ 45 degrés.

4. Trémie (100) pour l'alimentation de matériau en vrac selon l'une quelconque des revendications précédentes, la partie supérieure (A) de la trémie (100) qui est plus longue en hauteur s'étendant vers le bas de l'axe vertical central 'Y' de la trémie (100) que la partie inférieure (B) de la trémie (100).

5. Trémie (100) pour l'alimentation de matériau en vrac selon l'une quelconque des revendications précédentes, la partie supérieure (A) de la trémie étant d'environ 1 à 5 fois ou 2 à 5 fois la hauteur de la partie inférieure (B) de la trémie (100).

6. Trémie (100) pour l'alimentation de matériau en vrac selon l'une quelconque des revendications précédentes, deux agitateurs ou plus (140, 150) étant situés sur des côtés opposés (142, 152) de la partie inférieure (B) de la trémie (100).

7. Trémie (100) pour l'alimentation de matériau en vrac selon l'une quelconque des revendications précédentes, le degré d'inclinaison des panneaux (142, 152, 172, 174) qui forment la partie inférieure (B) étant compris entre environ 10 degrés et environ 45 degrés.

8. Trémie (100) pour l'alimentation de matériau en vrac selon la revendication 7, le degré d'inclinaison des panneaux (142, 152) vers l'intérieur à partir d'un axe 'Y' central vertical étant compris entre environ 10 degrés et environ 45 degrés.

9. Trémie (100) pour l'alimentation de matériau en vrac selon l'une quelconque des revendications précédentes, la sortie (130) de la trémie (100) étant environ 30 % à 80 % plus petite que la section transversale de la zone entre la partie supérieure (A) et la partie inférieure (B) de la trémie (100).

10. Trémie (100) pour l'alimentation de matériau en vrac selon l'une quelconque des revendications précédentes, la partie supérieure (A) et la partie inférieure (B) de la trémie (A) étant réalisées à partir de panneaux qui sont plats ou sensiblement plats et formant une surface plane et/ou lisse pour le passage (111) passant à travers la trémie (100).

11. Système de convoyage comprenant une trémie (100) selon l'une quelconque des revendications 1 à 10 ;
le système de convoyage faisant partie d'un système de convoyage mécanique tel qu'un système de convoyage pour brûler les déchets ménagers et/ou industriels.
